# EUROPÄISCHE PATENTSCHRIFT

(11) **EP 2 656 020 B1**
(45) Veröffentlichungstag und Bekanntmachung des Hinweises auf die Patenterteilung: **01.04.2020**
(21) Anmeldenummer: 11801994.2
(22) Anmeldetag: 23.11.2011
(51) Int. Cl.: G01F 1/696, G01F 1/698

(54) **THERMISCHES DURCHFLUSSMESSGERÄT**
THERMAL FLOW MEASURING DEVICE
DÉBITMÈTRE THERMIQUE

(30) Priorität: 23.12.2010 DE 102010064127
(43) Veröffentlichungstag der Anmeldung: 30.10.2013
(73) Patentinhaber: Endress+Hauser Flowtec AG, 4153 Reinach (CH)
(72) Erfinder: ARNOLD, Martin, 4153-Reinach (CH); WAGNER, Michel, 4127 Birsfelden (CH)
(74) Vertreter: Andres, Angelika Maria
(86) Internationale Anmeldenummer: PCT/EP2011/070853
(87) Internationale Veröffentlichungsnummer: WO 2012/084396

(56) Entgegenhaltungen:
- WO-A2-2007/063111
- DE-A1-102007 050 792
- US-A- 4 753 111

## Beschreibung

Die vorliegende Erfindung betrifft ein thermisches Durchflussmessgerät, wobei während einer Heizphase vorgegebener Länge tₕ während eines ersten Messzyklus' ein konstanter Heizstrom Iₕ einer ersten Stromquelle durch einen ersten Widerstand fließt, welcher erste Widerstand dem Messmedium ausgesetzt wird, wobei während einer ersten Messphase vorgegebener Länge t_{r,1} während des ersten Messzyklus' ein konstanter Messstrom Iₘ einer zweiten Stromquelle durch den ersten Widerstand fließt, wobei während der ersten Messphase t_{r,1} über dem ersten Widerstand eine erste Spannung U_{r,1} abfällt, wobei während einer zweiten Messphase vorgegebener Länge t_{r,2} während des ersten Messzyklus' der konstante Messstrom Iₘ der zweiten Stromquelle durch einen zweiten Widerstand fließt, welcher zweite Widerstand dem Messmedium ausgesetzt wird, wobei während der zweiten Messphase t_{r,2} über dem zweiten Widerstand eine zweite Spannung U_{r,2} abfällt.

Aus dem Stand der Technik bekannt sind Temperatursensoren für die industrielle Prozesstechnik. Ihr Aufbau ist dem von thermischen Durchflussmessgeräten ähnlich, mit dem Unterschied, dass herkömmliche thermische Durchflussmessgeräte üblicherweise zwei möglichst gleichartig ausgestaltete Temperatursensoren verwenden, die in, meist stiftförmigen, Metallhülsen, so genannten Stingers oder Prongs, angeordnet sind und die in thermischem Kontakt mit dem durch ein Messrohr oder durch die Rohrleitung strömenden Medium sind. Meist sind sie in das Medium eingetaucht. Für die industrielle Anwendung sind beide Temperatursensoren üblicherweise in ein Messrohr eingebaut; die Temperatursensoren können aber auch direkt in der Rohrleitung montiert sein. Einer der beiden Temperatursensoren ist ein sog. aktiver Temperatursensor, der mittels einer Heizeinheit beheizt wird. Als Heizeinheit ist entweder eine zusätzliche Widerstandsheizung vorgesehen, oder bei dem Temperatursensor selbst handelt es sich um ein Widerstandselement, z.B. um einen RTD-(Resistance Temperature Device) Sensor, der durch Umsetzung einer elektrischen Leistung, z.B. durch eine entsprechende Variation des Heizstroms, erwärmt wird. Bei dem zweiten Temperatursensor handelt es sich um einen sog. passiven Temperatursensor: Er misst die Temperatur des Mediums bei möglichst geringer Eigenerwärmung durch den Messstrom.

Bisher wurden hauptsächlich RTD-Elemente mit wendelförmig gewickelten Platindrähten in thermischen Durchflussmessgeräten eingesetzt. Bei Dünnfilm-Widerstandsthermometem (TF-RTDs) wird herkömmlicherweise eine mäanderförmige Platinschicht auf ein Substrat aufgedampft. Darüber wird eine weitere Glasschicht zum Schutz der Platinschicht aufgebracht. Der Querschnitt der Dünnfilm-Widerstandsthermometer ist im Unterschied zu den, einen runden Querschnitt aufweisenden RTD-Elementen, rechteckig. Die Wärmeübertragung in das Widerstandselement und/oder aus dem Widerstandselement erfolgt demnach über zwei gegenüberliegende Oberflächen, welche zusammen einen Großteil der Gesamtoberfläche eines Dünnfilm-Widerstandsthermometers ausmachen.

Aus dem US-Patent 6,230,560 ist ein thermisches Durchflussmessgerät bekannt, mit zwei Widerständen, welche der Strömung des Messmediums durch ein Messrohr ausgesetzt sind. Allen Ausführungsformen gemein ist, dass beide Widerstände mit einem Heizstrom beheizt werden, und dass die Temperatur des Messmediums mit einem dritten Widerstand gemessen wird. Die Berechnung des Durchflusses des Messmediums durch das Messrohr erfolgt dabei mittels den sich aus den Widerständen errechneten Temperaturen der beiden beheizten Widerstände und der Temperatur des dritten Widerstands. Die beiden beheizten Widerstände werden mittels einer Konstant-Stromquelle dauerhaft beheizt. Aus R=U/I mit dem Heizstrom I und dem gemessenen Spannungsabfall U über dem beheizten Widerstand ergibt sich dessen Widerstand R. Mittels R=R₀+(1+αΔT) ergibt sich dessen Temperatur T=ΔT+T_{G}, mit T_{G} der Temperatur des dritten, unbeheizten Widerstands.

Es ist jedoch in einer Ausführungsform vorgeschlagen, eine Spannungsquelle zur Versorgung der beheizten Widerstände mit dem Heizstrom zu nutzen. Dann sind Hilfswiderstände mit den beheizten Widerständen in Reihe geschaltet, deren Widerstand sich nicht durch den Heizstrom verändert - ihr Widerstand ist im Wesentlichen temperaturunabhängig. Zusätzlich sind Strommessgeräte vorgeschlagen, die den aktuellen Heizstrom über den Hilfswiderständen messen. Dieser fließt anschließend in die Berechnung der Temperaturen der beheizten Widerstände, wie bereits oben beschrieben, mit ein.

Nachteilig ist die Verwendung von mindestens drei Widerständen, zwei beheizten und einem unbeheiztem, welche so zum Lumen des Messrohrs ausgerichtet sind, dass sie in gutem thermischen Kontakt mit dem Messmedium stehen, zum Ermitteln des Durchflusses des Messmediums im Messrohr.

In der Offenlegungsschrift WO 2007/063111 A2 ist eine Schaltung eines thermischen Durchflussmessgeräts gezeigt, dessen erster und zweiter Widerstand im Lumen des Messrohrs angeordnet sind. Die Schaltung weist weiterhin eine erste Stromquelle und eine zweite Stromquelle auf. Die erste Stromquelle liefert einen Heizstrom, die zweite Stromquelle erzeugt über den Widerständen eine Messspannung. Zumindest ein Schalter zwischen dem ersten Widerstand und den Stromquellen regelt die Versorgung des ersten Widerstands mit dem Heizstrom oder mit dem Messstrom, indem er den ersten Widerstand entweder mit der ersten Stromquelle oder mit der zweiten Stromquelle in Reihe schaltet. Ist nur der erste Widerstand beheizt, wird der zweite Widerstand mit der zweiten Stromquelle über einen Schalter zumindest zeitweise in Reihe geschaltet. Sind beide Widerstände beheizt, gilt das für den ersten Widerstand gesagte auch für den zweiten Widerstand.

Der erste Widerstand wird dabei mit einer konstanten Wärmemenge beheizt. Die Zufuhr der konstanten Wärmemenge wird mittels des Schalters, welcher den ersten und/oder den zweiten Widerstand mit der ersten Stromquelle in Reihe schaltet, gesteuert. Nachteilig an dieser Vorrichtung ist, dass die erste Stromquelle keinen konstanten Strom bereitstellt. Es handelt sich vielmehr um eine Spannungsquelle mit konstanter Spannung. Die Heizleistung am ersten Widerstand hängt somit stark von der Heizphasenlänge ab. Sie errechnet sich gemäß P=(tₕ/T₁)^{∗}(U²/R), mit der Spannung U, dem Widerstandswert R, der Heizperiodenlänge tₕ und der Messperiodendauer T₁.

Die US4 753 111 A offenbart einen thermischen Strömungssensor mit zwei Konstant-Stromquellen und zwei Schaltern und zwei Messwiderständen. Jeweils eine Stromquelle und ein Schalter sind einem Widerstand zugeordnet Die DE 10 2007 050792 A1 offenbart einen thermischen Strömungssensor mit drei Messwiderständen und einer gemeinsamen Spannungsquelle. Die drei Widerstände können jeweils mittels eines Schalters in Reihe mit entweder einem hochohmigen Widerstand oder einem niederohmigen Widerstand geschaltet werden. Bei den niederohmigen Widerständen handelt es sich m Shunt-Widerstände.

Die Aufgabe der Erfindung besteht darin, ein thermisches Durchflussmessgerät vorzuschlagen, welches einfach aufgebaut und hochgenau misst.

Die Aufgabe wird gelöst durch den Gegenstand des unabhängigen Anspruchs 1. Weiterbildungen und Ausgestaltungen der Erfindung finden sich in den Merkmalen der abhängigen Ansprüche wider.

Die Erfindung lässt zahlreiche Ausführungsformen zu. Einige davon sollen hier kurz anhand der nachfolgenden Figuren näher erläutert werden. Gleiche Elemente sind in den Figuren mit gleichen Bezugszeichen versehen.
- Fig. 1: zeigt einen Schaltungsplan eines erfindungsgemäßen thermischen Durchflussmessgeräts,
- Fig. 2: zeigt einen zeitlichen Ablauf der Ausführung des Verfahrens mit der Schaltung gemäß Fig. 1,
- Fig. 3: zeigt einen alternativen Schaltungsplan eines erfindungsgemäßen thermischen Durchflussmessgeräts,
- Fig. 4: zeigt einen weiteren alternativen Schaltungsplan eines erfindungsgemäßen thermischen Durchflussmessgeräts.

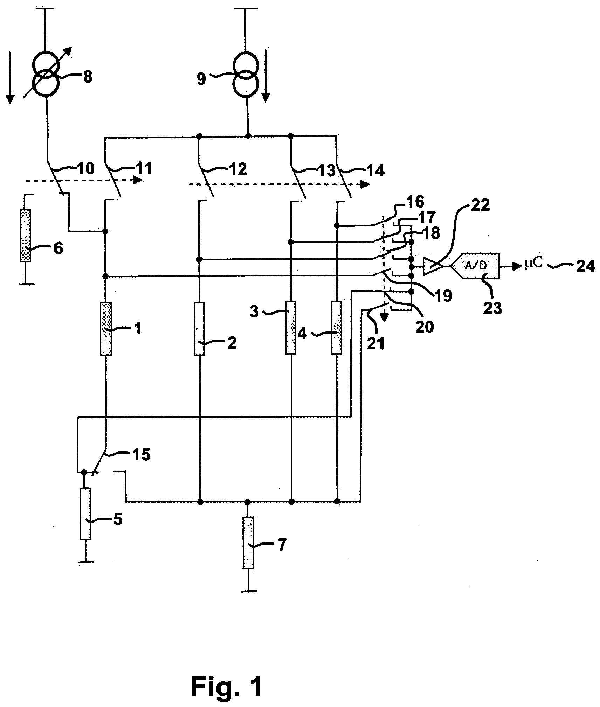

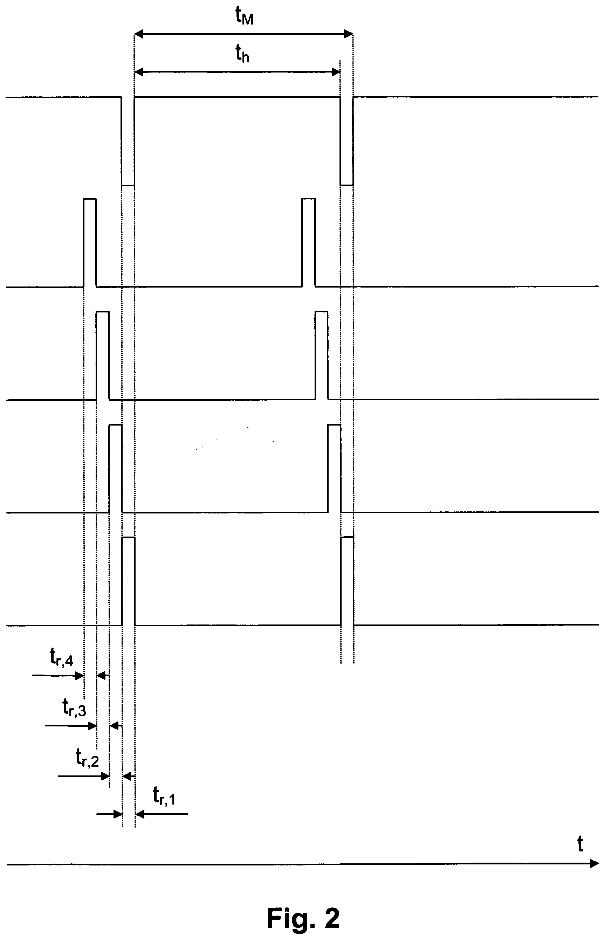

In Fig. 1 ist ein Ersatz-Blockschaltbild einer Schaltung eines erfindungsgemäßen thermischen Durchflussmessgeräts zum Ermitteln des Durchflusses eines Messmediums durch ein Messrohr dargestellt. Ein zeitlicher Ablauf der Ausführung des Verfahrens mit der beschriebenen Schaltung ist in Fig. 2 veranschaulicht. Daher wird die Funktionsweise der Schaltung aus Fig. 1 zusammen mit dem zeitlichen Ablauf aus Fig. 2 dargelegt. Fig. 2 zeigt schematisch die Phasen in denen Ströme durch einzelne Bauteile der Schaltung fließen. Die Höhe der Ausschläge korreliert dabei nicht mit der Stromstärke. Es soll nur ein Eindruck von Schaltzeiten und vom sequentiellen Ablauf des Verfahrens vermittelt werden.

Die Schaltung weist einen ersten Widerstand 1 und einen zweiten Widerstand 2 auf, welche jeweils in einem Gehäuse angeordnet sind, welches das Lumen des Messrohrs begrenzt. Dabei ist eine Variante, jeden der beiden Widerstände 1 und 2 in einem separaten Gehäuse, z.B. die im Stand der Technik beschriebenen Metallhülsen, anzuordnen. In einer anderen Variante sind beide Widerstände 1 und 2 in einem gemeinsamen Gehäuse anzuordnen. Die beiden Widerstände 1 und 2 sind in beiden Fällen der Strömung des Messmediums im Messrohr indirekt ausgesetzt.

Die Schaltung weist weiterhin einen ersten Schalter 10 auf. Der erste Schalter verbindet in einer, hier mit einer durchgezogenen Linie veranschaulichten, ersten Schalterstellung, den ersten Widerstand 1 mit einer ersten Stromquelle 8. In der ersten Schalterstellung ist der erste Widerstand mit einer ersten Stromquelle in Reihe geschaltet. Während eines Messzyklus' t_{M} geschieht dies während einer Heizphase tₕ. Die erste Stromquelle 8 ist dabei regelbar, insbesondere softwaregesteuert. Jedoch liefert sie einen während einer Heizphase tₕ konstanten Heizstrom Iₕ.

Neben dem ersten Schalter 10, weist die Schaltung weitere Schalter 11, 12, 13, 14 und 15 auf, und die Schalter 16, 17, 18, 19, 20 und 21. Die Schalter 16, 17, 18, 19, 20 und 21 können dabei einzelne Schalter oder Schalter eines Mehrfachschalters oder Multiplexers sein, wie hier dargestellt.

Die Schalter 11, 12, 13 und 14 sind in der hier dargestellten ersten Schalterstellung offen, d.h. eine zweite Stromquelle ist nicht mit den Widerständen 1, 2, 3 und 4 verbunden. Über den sechsten Schalter 15 sind in der, hier mit der durchgezogenen Linie veranschaulichten, ersten Schalterstellung, der erste Widerstand 1 und ein Shunt-Widerstand 5 in Reihe geschaltet. Somit sind in der ersten Schalterstellung die erste Stromquelle 8, der erste Widerstand 1 und der Shunt-Widerstand 5 in Reihe geschaltet. Der Shunt-Widerstand 5 ist seinerseits mit einem Bezugspotential verbunden, beispielsweise mit dem Massepotential.

Auch die Schalter 16, 17, 18, 19 und 21 des Multiplexers sind in der ersten Schalterstellung offen. Nur Schalter 20 ist während der gesamten Heizphase tₕ geschlossen, um eine fünfte Spannung U_{h,5}, welche während der Heizphase tₕ in zumindest der ersten Schalterstellung über dem Shunt-Widerstand 5 abfällt, den dem Schalter 20 nach geschalteten Signalverarbeitungselementen 22, 23 und 24 zuzuführen, damit diese dort weiterverarbeitet werden kann. Die Spannung U_{h,5} ist ein Maß für den durch den ersten Widerstand 1 fließenden Heizstrom Iₕ. Der Shunt-Widerstand 5, oder auch Strommesswiderstand genannt, weist üblicherweise einen geringen Widerstandswert auf. Er ist im Wesentlichen temperaturunabhängig. Darüber hinaus kann er in einem Gehäuse thermisch isoliert von der umgebenden Umwelt und insbesondere thermisch isoliert vom Messmedium angeordnet sein und/oder er ist beispielsweise ebenfalls hochpräzise.
Somit fließt während der Heizphase tₕ während eines ersten Messzyklus' der konstante Heizstrom lₕ der ersten Stromquelle 8 durch den ersten Widerstand 1 und die fünfte Spannung U_{h,5} fällt über dem Shunt-Widerstand 5 ab.

Während einer ersten Messphase t_{r,1} wird hier der erste Schalter 10 in einer zweiten Schalterstellung in die hier angedeutet gestrichelte Position geschaltet. Dann ist der erste Widerstand 1 getrennt von der ersten Stromquelle 8. Diese ist hier dann direkt verbunden mit einem Bypass-Widerstand 6. Der Bypass-Widerstand 6 weist dabei einen Widerstandswert auf, der im Wesentlichen dem eines ersten Messpfads aus erstem Widerstand 1, Shunt-Widerstand 5 und der dazwischen liegenden Schalter 11 und 15 entspricht, zumindest bei einer mittleren erwarteten Temperatur und damit einem mittleren Widerstandswert des ersten Widerstands 1. Durch das Umschalten der ersten Stromquelle 8 vom ersten Widerstand 1 auf den Bypass-Widerstand 6 wird der Heizstrom Iₕ auf den Bypass-Widerstand 6 abgeleitet und die erste Stromquelle 8 erfährt keinen signifikanten Lastsprung. Dies Verkürzt die Einregelzeit der ersten Stromquelle 8 beim Umschalten des ersten Schalters 10 und vermindert zudem Über- bzw. Unterschwinger während der Einregelzeit. Dies hat eine Verbesserung der Messgenauigkeit des Heizstromes Iₕ und damit der Ermittlung des Durchflusses des Messmediums durch das Messrohr zu Folge.

In der zweiten Schalterstellung ist weiterhin der zweite Schalter 11 geschlossen. Der erste und der zweite Schalter 10 und 11 werden hier gleichzeitig umgeschaltet. Somit ist die zweite Stromquelle 9 mit dem ersten Widerstand 1 in Reihe geschaltet. Während der ersten Messphase t_{r,1} während des ersten Messzyklus' fließt ein konstanter Messstrom Iₘ der zweiten Stromquelle 9 durch den ersten Widerstand 1 und es fällt über dem ersten Widerstand eine erste Spannung U_{r,1} ab. Diese wird den Signalverarbeitungselementen 22, 23 und 24 zugeführt, indem der sechste Schalter 15 auf die gestrichelt angedeutete Position geschaltet ist und die Schalter 19 und 21 geschlossen sind. Der in der Heizphase tₕ geschlossene Schalter 20 ist in der zweiten Schalterstellung während der ersten Messphase t_{r,1} geöffnet. Alternativ könnten auch die Schalter 19 und 20 geschlossen sein, bei geöffnetem Schalter 21. Der Unterschied zwischen diesen beiden illustrierten Alternativen besteht hier darin, dass der erste Widerstand 1 einerseits über einen Offset-Widerstand 7 mit dem Bezugspotential verbunden ist und andererseits über den Shunt-Widerstand 5. Prinzipiell würde eine Verbindung mit dem Bezugspotential ohne einen der genannten Widerstände 5 oder 7 zur Funktion der Schaltung ausreichen, doch der bekannte Widerstandswert des Offset-Widerstands 7 respektive des Shunt-Widerstands 5 bietet den Vorteil, dass der Messstrom Iₘ der zweiten Stromquelle 9 dadurch messbar ist, dass eine erste Offset-Spannung U_{o,1} über dem Offset-Widerstand 7 respektive eine Spannung U_{r,5} über dem Shunt-Widerstand 5 abfällt. Die Offset-Spannung U_{o,1}, sowie die nachfolgend beschriebenen, während weiterer Messphasen t_{r,2} bis t_{r,4}, über dem Offset-Widerstand 7 abfallenden Offset-Spannungen U_{o,2} bis U_{o,4}, werden dem hier als Verstärker 22 gezeichneten Signalverarbeitungselement so zugeführt, dass diese Offset-Spannungen U_{o,1} bis U_{o,4} von den während den Messphasen t_{r,1} bis t_{r,4}, über den Widerständen 1 bis 4 abfallenden Spannungen abgezogen werden. So wird zumindest ein erster Offset in der ersten Spannung U_{r,1} mittels der zweiten Offset-Spannung Uₒ korrigiert und zumindest ein zweiter Offset in der zweiten Spannung U_{r,2} wird somit mittels der zweiten Offset-Spannung Uₒ korrigiert. Üblicherweise wird dafür ein Differenzverstärker anstatt eines Operationsverstärkers verwendet. Der Einsatz weiterer oder anderer Signalverarbeitungselemente sind denkbar, wie beispielsweise der Einsatz von Filtern.

Der separate Offset-Widerstand 7 bietet darüber hinaus den Vorteil, dass während der Heizphase tₕ, also während der Shunt-Widerstand 5 zur Messung des Heizstroms Iₕ dient, der Messstrom Iₘ der zweiten Stromquelle 9 weiterhin messbar ist. Die Messsignale, also die verschiedenen Offset-Spannungen U_{o,1} bis U_{o,4}, können darüber hinaus zur Diagnose der Schaltung verwendet werden. So könnte beispielsweise ein Leitungsbruch an den Widerständen 1 bis 4 detektiert werden. Wird hingegen der Shunt-Widerstand 5 zur Messung des Messstroms genutzt, kann der Offset-Widerstand 7 kostengünstiger ausgestaltet sein. Es muss sich nicht um einen Präzisionswiderstand handeln.

Während einer zweiten Messphase t_{r,2} wird somit in einer dritten Schalterstellung der zweite Widerstand 2 mit der zweiten Stromquelle 9 in Reihe geschaltet ist, wobei der konstante Messstrom Im der zweiten Stromquelle 9 durch einen zweiten Widerstand 2 fließt und wobei über dem zweiten Widerstand eine zweite Spannung U_{r,2} abfällt. Dazu ist im Vergleich zur zweiten Schalterstellung während der ersten Messphase t_{r,1} der zweite Schalter 11 geöffnet und der dritte Schalter 12 geschlossen. Des Weiteren ist der neunte Schalter 18 geschlossen und der zehnte Schalter 19 offen. Der erste Schalter 10 und der sechste Schalter 15 sind wieder in der mit der durchgezogenen Linie veranschaulichten Position, wie in der ersten Schalterstellung. Auch der Schalter 20 ist zur Heizstrommessung wieder geschlossen. Theoretisch könnte auch während der Heizphase tₕ mit geschlossenem Schalter 19 die über dem ersten Widerstand 1 abfallende Spannung gemessen werden. Jedoch ist die zuvor beschriebene Messung der ersten Spannung U_{r,1} vorteilhaft.

Die dritte Schalterstellung unterscheidet sich somit von der in Fig. 1 gezeigten ersten Schalterstellung dadurch, dass zusätzlich der dritte, der neunte und der zwölfte Schalter 12, 18 und 21 geschlossen sind.

Der Durchfluss des Messmediums durch das Messrohr könnte sich anhand der ersten Spannung U_{r,1}, der zweiten Spannung U_{r,2} und der fünfte Spannung U_{r,5} errechnen lassen. Der Durchfluss Q errechnet sich z.B. aus dem Quotienten aus Heizleistung Pₕ und der Differenz der Temperaturen des beheizten, ersten Widerstands 1 und des unbeheizten, zweiten Widerstands 2. Die Heizleistung Pₕ ergibt sich aus dem RMS-Wert, also dem gemessenen Effektivstromwert des Gesamtstroms I₁ am ersten Widerstand 1 und dem Widerstandswert des ersten Widerstands P=I₁^{2∗}R₁. Effektivstromwert des Gesamtstroms I₁ setzt sich dabei zusammen aus dem Heizstrom Iₕ, repräsentiert durch die fünfte Spannung U_{h,5}, und dem Messstrom Iₘ, repräsentiert durch die erste Offset-Spannung U_{o,1}. Die Temperaturen des ersten und des zweiten Widerstands 1 und 2 ergeben sich aus den Widerstandswerten des ersten und des zweiten Widerstands 1 und 2, welche sich wiederum aus der ersten Spannung U_{r,1}, der zweiten Spannung U_{r,2} und der ersten Offset-Spannung U_{o,1} und der zweiten Offset-Spannung U_{o,2} ergeben. Ein Vorteil gegenüber dem Stand der Technik besteht eben einerseits darin und die Heizleistung aus den gemessenen Stromwerten zu ermitteln und andererseits den Messstrom dabei zu berücksichtigen.

In einer vierten und fünften Schalterstellung werden die ersten und zweiten Kalibrier-Widerstände mit der zweiten Stromquelle in Reihe geschaltet, wobei während einer dritten Messphase Messzeit t_{r,3} der konstante Messstrom Iₘ der zweiten Stromquelle durch den ersten Kalibrier-Widerstand 3 fließt, wobei über dem ersten Kalibrier-Widerstand 3 eine dritte Spannung U_{r,3} abfällt, und wobei während der vierten Messphase t_{r,4} der konstante Messstrom Iₘ der zweiten Stromquelle durch den zweiten Kalibrier-Widerstand 4 fließt, wobei über dem zweiten Kalibrier-Widerstand 4 eine vierte Spannung U_{r,4} abfällt. Neben den genannten zwei Kalibrier-Widerständen 3 und 4 können weitere Kalibrier-Widerstände vorgesehen sein, um bei einer NichtLinearität mehr Stützpunkte zur Kalibrierung zur Verfügung zu haben und damit die Messgenauigkeit steigern zu können.

Die vierte Schalterstellung unterscheidet sich von der ersten Schalterstellung dadurch, dass zusätzlich der vierte, der achte und der zwölfte Schalter 13, 17 und 21 geschlossen sind. Die fünfte Schalterstellung unterscheidet sich von der ersten Schalterstellung dadurch, dass zusätzlich der fünfte, der siebte und der zwölfte Schalter 14, 16 und 21 geschlossen sind.

Die Kalibrier-Widerstände 3 und 4 sind ebenfalls hochpräzise und im Wesentlichen temperaturunabhängige Widerstände. Sie entsprechen den in der WO 2007/063111 A2 offenbarten Präzisionswiderständen und dienen derselben Funktion. Daher soll hier nicht weiter auf deren Funktion eingegangen werden, nur soviel, dass die gemessenen Widerstandswerte mit den gemessenen Widerstandswerten der Kalibrier-Widerstände 3 und 4 normiert werden. Die gesamte Offenbarung hinsichtlich der Präzisionswiderstände der WO 2007/063111 A2 soll hiermit auch in diesem Dokument als offenbart gelten. Die Kalibrier-Widerstände 3 und 4 sind im Übrigen im selben Gehäuse nahe zusammen angeordnet und unterliegen somit denselben Temperaturschwankungen.

Wie Fig. 2 zu entnehmen ist, ist die Heizphase tₕ länger wie jede der Messphasen t_{r,1} bis t_{r,4}, insbesondere ist sie viel länger, z.B. zehn Mal so lang. Die Messphasen t_{r,1} bis t_{r,4} sind während eines Messzyklus' im Wesentlichen gleich lang. Auch der Messstrom Im ist während eines Messzyklus' konstant. Die Messphasen t_{r,1} bis t_{r,4} sind im Vergleich zur Messzyklusdauer t_{M} kurz, insbesondere sehr kurz. Über mehrere Messzyklen können sie variabel sein.

Werden zwei aufeinander folgende Messzyklen betrachtet, ist das Verhältnis tₕ/t_{r,1} der Länge der Heizphase tₕ zur Länge der ersten Messphase t_{r,1} über mindestens zwei aufeinander folgende Messzyklen konstant und größer 1, und das Verhältnis tₕ/t_{r,2} der Länge der Heizphase tₕ zur Länge der zweiten Messphase t_{r,2} ist über mindestens zwei aufeinander folgende Messzyklen konstant und größer 1.

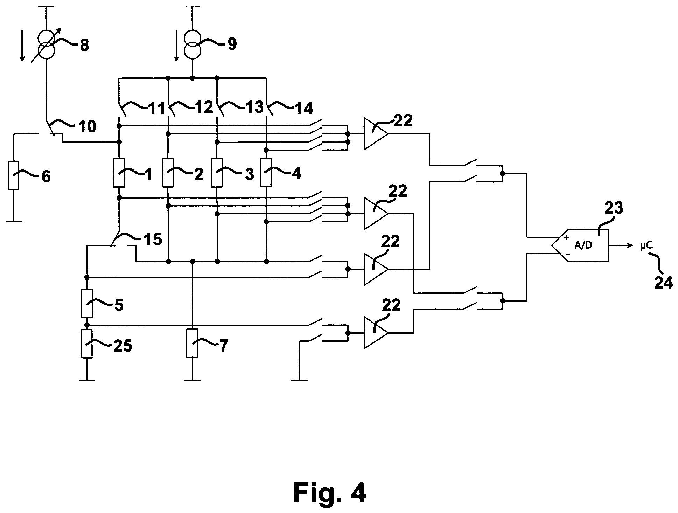

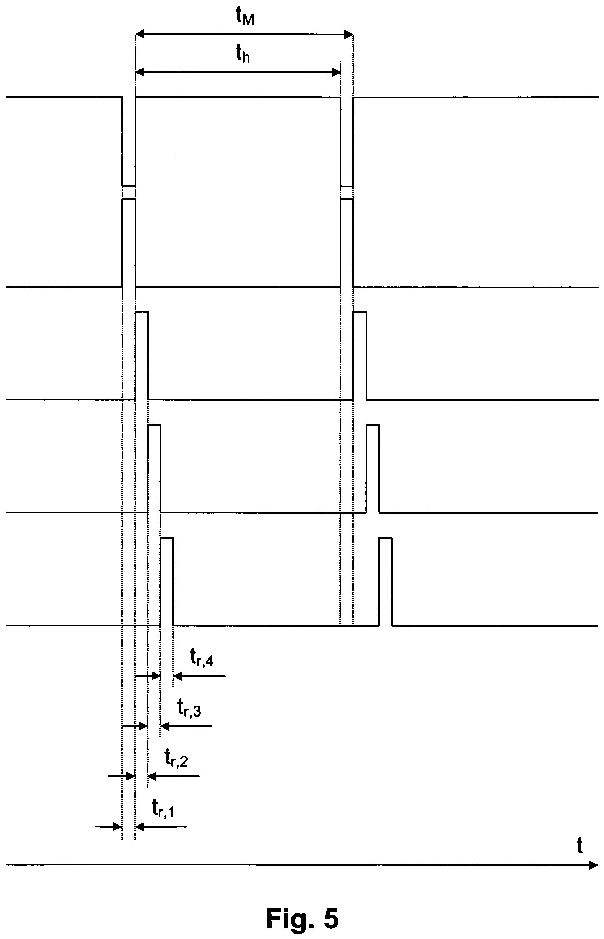

Das Verfahren findet in vorteilhafter Weise in einem Messzyklus statt, die Messphasen können jedoch auch einzeln nach jeweils einer Heizphase, wie in Fig. 4 der WO 2007/063111 A2 gezeigt, stattfinden. Die hier gezeigte Abfolge der einzelnen Messzyklen ist ebenfalls nicht zwingend. So könnten die Messphase t_{r,1} bis t_{r,4} sequentiell nacheinander folgen, wie in Fig. 5 gezeigt.

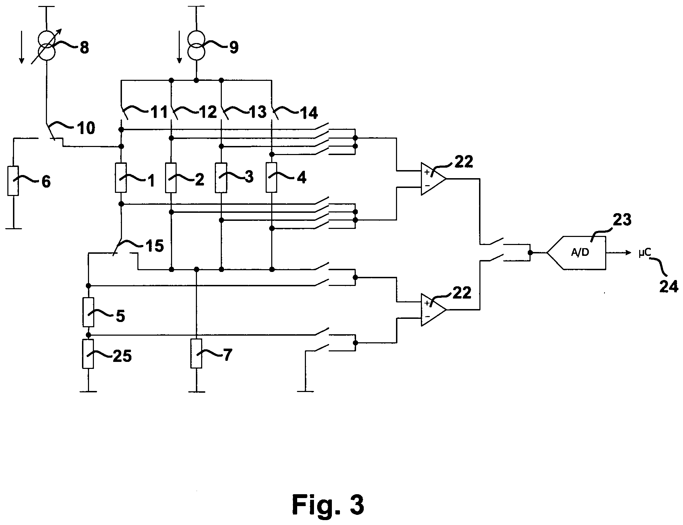

In Fig. 3 ist eine alternative Ausgestaltung der Erfindung veranschaulicht. Hier werden die Widerstandswerte mit einer so genannten Vierleitermessung erfasst. Der Vorteil ist, eine im Vergleich zur Ausführungsform aus Fig. 1 gesteigerte Messgenauigkeit. Die Signalpfade bei der Vierleitermessung, also hier zwischen den Abgriffen direkt an den Ein- und Ausgängen der jeweiligen Widerstände 1, 2, 3, 4 und 5 und den Eingängen der Verstärker 22 sind sehr hochohmig im Vergleich zu herkömmlichen Signalpfaden. Dadurch fließt praktisch kein Strom. Ein Spannungsabfall über einem herkömmlichen Schalter, wie z.B. über den Schaltern 16 bis 21 aus Fig. 1, beeinträchtigt die Messung. Bei der Vierleitermessung fällt praktisch keine Spannung über den Schaltern im oben beschriebenen Signalpfad zwischen den Widerständen 1 bis 5 und den Verstärkern 22 ab, wodurch die Messgenauigkeit erhöht wird.

In der skizzierten Ausgestaltung ist das Vorhandensein des Offset-Widerstands 7, im Vergleich zur der in Fig. 1 skizzierten Ausführungsform der Erfindung, zu einer Verbesserung der Messgenauigkeit wesentlich. Ohne den Offset-Widerstand 7 würde die Messgenauigkeit leiden. Werden jedoch die Verstärker 22 bipolar betrieben, kann wiederum auf den Offset-Widerstand 7 verzichtet werden.
In der beschriebenen Ausgestaltung sind zwei in Reihe geschaltete Shunt-Widerstände 5 und 25 vorgesehen. Die über dem ersten Shunt-Widerstand 5 abfallende Spannung wird differentiell gemessen. Der zweite Shunt-Widerstand 25 weist insbesondere einen wesentlich kleineren Widerstand als der erste Shunt-Widerstand 5 auf. Die Temperaturen des ersten und des zweiten Widerstands 1 und 2 sind proportional zu den Widerstandswerten des ersten und des zweiten Widerstands 1 und 2, welche sich wiederum aus der ersten Spannung U_{r,1}, der zweiten Spannung U_{r,2} ergeben. Durch die differentielle Messung sind die Werte der ersten Offset-Spannung U_{o,1} und der zweiten Offset-Spannung U_{o,2} hier nun nicht weiter von Belang zur Temperaturbestimmung, verglichen mit der Ausgestaltung der Erfindung aus Fig. 1.

Die Schaltung aus Fig. 4 weist im Vergleich zur Schaltung aus Fig. 3 statt zwei differentiellen Verstärkern vier Verstärkerelemente auf und einen A/D-Wandler mit differentiellem Eingang. In Fig. 3 und Fig. 4 ist keine Auswertung der Spannungsabfälle über den Widerständen möglich, da die Schalter zu den Signalverarbeitungselementen offen sind. Einem Fachmann geht die Funktionsweise dieser Schaltung durch die Beschreibung der Schaltung gemäß Fig. 1 eindeutig hervor.

### Bezugszeichenliste

- 1: Erster Widerstand
- 2: Zweiter Widerstand
- 3: Erster Kalibrierwiderstand
- 4: Zweiter Kalibrierwiderstand
- 5: Shunt-Widerstand
- 6: Bypass-Widerstand
- 7: Offset-Widerstand
- 8: Erste Stromquelle
- 9: Zweite Stromquelle
- 10: Erster Schalter
- 11: Zweiter Schalter
- 12: Dritter Schalter
- 13: Vierter Schalter
- 14: Fünfter Schalter
- 15: Sechster Schalter
- 16: Siebter Schalter
- 17: Achter Schalter
- 18: Neunter Schalter
- 19: Zehnter Schalter
- 20: Elfter Schalter
- 21: Zwölfter Schalter
- 22: Verstärker
- 23: A/D-Wandler
- 24: Mikrocontroller
- 25: Zweiter Shunt-Widerstand

## Patentansprüche

1. Thermisches Durchflussmessgerät zum Ermitteln des Durchflusses eines Messmediums durch ein Messrohr, mit einer elektrischen Schaltung, welche einen ersten Widerstand (1) und einen zweiten Widerstand (2) zum Ermitteln des Durchflusses aufweist, welcher erste Widerstand (1) und welcher zweite Widerstand (2) jeweils in einem Gehäuse angeordnet sind, welches das Lumen des Messrohrs begrenzt, so dass der erste Widerstand und der zweite Widerstand dazu eingerichtet sind, einem durch das Messrohr strömenden Medium indirekt ausgesetzt zu sein, wobei die elektrische Schaltung einen Shunt-Widerstand (5) und einen Bypass-Widerstand (6) aufweist,
wobei die Schaltung die Signalverarbeitungselemente Verstärker (22), A/D-Wandler (23) und Mikrocontroller (24) aufweist,
wobei die Schaltung weiterhin zumindest einen ersten Schalter (10), einen zweiten Schalter (11), einen Shunt-Schalter (15) sowie einen dritten Schalter (12) aufweist, welche so schaltbar sind,
dass der erste Widerstand (1) in einer ersten Schalterstellung über den ersten Schalter mit einer ersten Stromquelle (8) in Reihe geschaltet ist, wobei die erste Stromquelle dazu eingerichtet ist, einen Heizstrom zu liefern,
und dass der erste Widerstand (1) in einer zweiten Schalterstellung über den zweiten Schalter mit einer zweiten Stromquelle (9) in Reihe geschaltet ist,
und dass der zweite Widerstand (2) in einer dritten Schalterstellung über den dritten Schalter (12) mit der zweiten Stromquelle (9) in Reihe geschaltet ist und unbeheizt bleibt, und
wobei die zweite Stromquelle dazu eingerichtet ist, einen Messstrom zu liefern,
**dadurch gekennzeichnet,**
**dass** der Shunt-Widerstand (5) der elektrischen Schaltung in der ersten Schalterstellung mit dem ersten Widerstand (1) und mit der ersten Stromquelle (8) über den Shunt-Schalter (15) in Reihe geschaltet ist, zum Ermitteln eines Spannungsabfalls über dem Shunt-Widerstand (5) zwecks Messung des Heizstroms, und
**dass** in der zweiten Schalterstellung der Bypass-Widerstand (6) der elektrischen Schaltung mit der ersten Stromquelle (8) über den ersten Schalter (10) Reihe geschaltet ist, wodurch bei Umschalten der ersten Stromquelle vom ersten Widerstand auf den Bypass-Widerstand mittels des ersten Schalters (10) ein signifikanter Lastsprung vermeidbar ist,
wobei eine über dem Shunt-Widerstand abfallende Spannung dem Verstärker zugeführt wird.

2. Thermisches Durchflussmessgerät nach Anspruch 1,
**dadurch gekennzeichnet,**
**dass** in der zweiten Schalterstellung ein Offset-Widerstand (7) mit dem ersten Widerstand (1) und mit der zweiten Stromquelle (9) in Reihe geschaltet ist, und dass in der dritten Schalterstellung ein Offset-Widerstand (7) mit dem zweiten Widerstand (2) und mit der zweiten Stromquelle (9) in Reihe geschaltet ist.

3. Thermisches Durchflussmessgerät nach Anspruch 1 oder 2,
**dadurch gekennzeichnet,**
**dass** zumindest die erste Stromquelle (8) eine softwaregesteuerte Stromquelle ist.

## Claims

1. Thermal flowmeter designed to determine the flow of a measured medium through a measuring tube,
with an electrical circuit, which has a first resistor (1) and a second resistor (2) designed to determine the flow, wherein said first resistor (1) and said second resistor (2) are each arranged in a housing, which delimits the interior channel of the measuring tube, such that the first resistor and the second resistor are designed in such a way to be indirectly exposed to a medium flowing through the measuring tube,
wherein the electrical circuit has a shunt resistor (5) and a bypass resistor (6), wherein the circuit comprises the signal processing elements, i.e. an amplifier (22), an A/D converter (23) and a microcontroller (24),
wherein the circuit further comprises at least a first switch (10), a second switch (11), a shunt switch (15) and a third switch (12),
which can be switched in such a way that
the first resistor (1) is switched in series, in a first switch position, with a first power source (8) via the first switch, wherein the first power source is designed to deliver a heating current,
and that the first resistor (1) is switched in series, in a second switch position, with a second power source (9) via the second switch,
and that the second resistor (2) is switched in series, in a third switch position, with the second power source (9) via the third switch (12) and remains unheated, and
wherein the second power source is designed to deliver a measuring current, **characterized in that**
the shunt resistor (5) of the electrical circuit is switched in series, in the first switch position, with the first resistor (1) and with the first power source (8) via the shunt switch (15) to determine a drop in voltage over the shunt resistor (5) for the purpose of measuring the heating current, and
**in that**, in the second switch position, the bypass resistor (6) of the electrical circuit is switched in series with the first power source (8) via the first switch (10), as a result of which a significant load variation can be avoided when switching the first power source from the first resistor to the bypass resistor using the first switch (10),
wherein a voltage dropping over the shunt resistor is supplied to the amplifier.

2. Thermal flowmeter as claimed in Claim 1,
**characterized in that**
in the second switch position, an offset resistor (7) is switched in series with the first resistor (1) and with the second power source (9), and **in that**, in the third switch position, an offset resistor (7) is switched in series with the second resistor (2) and with the second power source (9).

3. Thermal flowmeter as claimed in Claim 1 or 2,
**characterized in that**
at least the first power source (8) is a software-controlled power source.

## Revendications

1. Débitmètre thermique destiné à la détermination du débit d'un produit mesuré s'écoulant à travers un tube de mesure,
avec un circuit électrique, lequel comprend une première résistance (1) et une deuxième résistance (2) destinées à la détermination du débit, laquelle première résistance (1) et laquelle deuxième résistance (2) sont chacune disposées dans un boîtier, lequel boîtier délimite le canal intérieur du tube de mesure, la première résistance et la deuxième résistance étant conçues de telle sorte à être exposées indirectement à un produit s'écoulant à travers le tube de mesure,
le circuit électrique comportant une résistance shunt (5) et une résistance de dérivation (6),
le circuit comprenant des éléments de traitement de signal, à savoir un amplificateur (22), un convertisseur A/N (23) et un microcontrôleur (24),
le circuit comprenant en outre au moins un premier interrupteur (10), un deuxième interrupteur (11), un interrupteur shunt (15) ainsi qu'un troisième interrupteur (12), lesquels peuvent être commutés
de telle sorte que la première résistance (1) est couplée, dans une première position d'interrupteur, en série via le premier interrupteur avec une première source de courant (8), la première source de courant étant conçue de telle sorte à délivrer un courant de chauffage,
et en ce que la première résistance (1) est couplée, dans une deuxième position d'interrupteur, en série via le deuxième interrupteur, avec une deuxième source de courant (9),
et en ce que la deuxième résistance (2) est couplée, dans une troisième position d'interrupteur, via un troisième interrupteur (12) avec la deuxième source de courant (9), et
la deuxième source de courant étant conçue de telle sorte à délivrer un courant de mesure,
**caractérisé**
**en ce que** la résistance shunt (5) du circuit électrique est couplée, dans la première position d'interrupteur, avec la première résistance (1) et avec la première source de courant (8) via l'interrupteur shunt (15), en vue de la détermination d'une chute de tension à travers la résistance shunt (5) à des fins de mesure du courant de chauffage, et
**en ce que** la résistance de dérivation (6) du circuit électrique est couplée, dans la deuxième position d'interrupteur, avec la première source de courant (8) via le premier interrupteur (10),
ceci permettant d'éviter un saut de charge significatif lors de la commutation de la première source de courant de la première résistance à la résistance de dérivation au moyen du premier interrupteur (10),
une tension chutant à travers la résistance shunt étant acheminée à l'amplificateur.

2. Débitmètre thermique selon la revendication 1,
**caractérisé**
**en ce que**, dans la deuxième position d'interrupteur, une résistance d'offset (7) est couplée en série avec la première résistance (1) et avec la deuxième source de courant (9), et en ce que, dans la troisième position d'interrupteur, une résistance d'offset (7) est couplée en série avec la deuxième résistance (2) et avec la deuxième source de courant (9).

3. Débitmètre thermique selon la revendication 1 ou 2,
**caractérisé**
**en ce qu'**au moins la première source de courant (8) est une source de courant pilotée par un logiciel.
